# EUROPEAN PATENT APPLICATION

(11) **EP 4 647 990 A1**
(43) Date of publication of application: **12.11.2025**
(21) Application number: 25172595.8
(22) Date of filing: 25.04.2025
(51) Int. Cl.: G06Q 20/18, G06Q 20/20, G06V 20/52, G07G 1/00, G07G 3/00

(54) **STORAGE MEDIUM STORING FRAUD DETECTION PROGRAM, METHOD, AND APPARATUS**

(30) Priority: 09.05.2024 JP 2024076553
(71) Applicant: FUJITSU LIMITED, Kawasaki-shi, Kanagawa 211-8588 (JP)
(72) Inventor: TAKAHASHI, Jun, Kawasaki-shi, Kanagawa, 211-8588 (JP); SAITO, Junya, Kawasaki-shi, Kanagawa, 211-8588 (JP); YAMAMOTO, Takuma, Kawasaki-shi, Kanagawa, 211-8588 (JP); SATO, Takuto, Kawasaki-shi, Kanagawa, 211-8588 (JP)
(74) Representative: Hoffmann Eitle

(57) **Abstract**

A fraud detection device includes a processor that executes a procedure. The procedure includes: detecting and tracking people who are within a predetermined range based on sensor data acquired through sensing in the predetermined range in a store including a payment area, where a self-service checkout is installed, and recognizing a behavior of each of the tracked people; calculating a determination score indicating an extent to which each of the tracked people is a person who is required to perform payment at the self-service checkout, based on the recognized behavior; assigning payment information, indicating that payment is completed, to a person who paid at the self-service checkout; and determining fraudulent passage at an exit of the store for each person passing through the exit, based on the determination score and the payment information.

## Description

### FIELD

The embodiments discussed herein are related to a fraud detection program, a fraud detection method, and a fraud detection device.

### BACKGROUND

Implementation of fully self-service checkouts where customers themselves register and pay for commodities in stores or the like is in progress. In the implementation of fully self-service checkouts, there is a problem of fraud in which customers who bring commodities into areas where self-service checkouts are installed take out the commodities in an unpaid state in which none of the commodities have been paid at the self-service checkouts, a so-called checkout-bypassing. Visual monitoring for checkout-bypassing by clerks places a heavy burden on the clerks. Therefore, techniques for automatically detecting checkout-bypassing is necessary.

For example, information processing systems that automate payment for commodities and shorten the time required for the payment for the commodities when shoppers purchase the commodities exhibited in stores have been proposed. The information processing systems find moving objects such as shoppers or baskets moving in the stores, define regions of the moving objects, and capture images of the moving objects while tracking movement of the moving objects. The information processing systems constantly capture images of states in shelves, compare the captured images before and after objects are taken out of the shelves, define regions of commodities to be recognized from the captured images, specify the commodities from the defined image regions, and perform payment for the specified commodities. In the information processing systems, during the payment, product information associated with the moving object areas is read, payment amounts are confirmed, and payment gates are made passable.

For example, information processing apparatuses that specify people who have entered facilities, estimate groups of a plurality of people, present estimation results of the groups to the people, and set the groups based on responses to the estimation results of the groups have been proposed. The information processing apparatuses estimate payers among people of a group, present estimation results of the payers to the people, and set the payers based on responses to the estimation results of the payers. Then, the information processing apparatuses collectively perform payment of all the commodities acquired by the people of the group based on the payment information of the payers.

### [Related Patent Documents]

Japanese Patent Application Laid-Open (JP-A) No. 2017-157216 PCT International Publication No. WO 2022/195752

In the techniques of the related art in which payment gates are passable when payment amounts are confirmed, all people who are going to pass through exits and do not perform the payment are detection targets of checkout-bypassing. Therefore, there is a likelihood of excessive detection with respect to people when people who do not require to perform payment pass through the exit. For example, companions, clerks, people or the like who have not taken any commodities in the group are likely to be detected as checkout-bypassing targets. Therefore, in the techniques of the related art, there is a problem that it is necessary to restrict a layout to an exit or restrict a behavior of people who do not require to perform payment by visual observation of a clerk, or it is necessary for a person such as a companion who does not require to perform payment to stand by in front of the gate until a payment person comes.

In the related art in which a payer is set in the group, there is a problem that an appropriate payer may not be set due to erroneous grouping such as a case where close groups are regarded as one group or a case where one group is regarded as two or more groups.

### SUMMARY

According to an aspect, an object of the disclosed technique is to prevent excessive detection when checkout-bypassing in which a person who does not perform payment passes through an exit is detected.

According to an aspect of the embodiments, a non-transitory recording medium storing a program that causes a computer to execute fraud detection processing comprising: detecting and tracking people who are within a predetermined range based on sensor data acquired through sensing in the predetermined range in a store including a payment area, where a self-service checkout is installed, and recognizing a behavior of each of the tracked people; calculating a determination score indicating an extent to which each of the tracked people is a person who is required to perform payment at the self-service checkout, based on the recognized behavior; assigning payment information, indicating that payment is completed, to a person who paid at the self-service checkout; and determining fraudulent passage at an exit of the store for each person passing through the exit, based on the determination score and the payment information.

According to another aspect, there is an effect that it is possible to prevent excessive detection when checkout-bypassing in which a person who does not perform payment passes through an exit is detected.

### BRIEF DESCRIPTION OF DRAWINGS

Fig. 1 is a schematic configuration diagram illustrating a fraud detection system;
Fig. 2 is a functional block diagram illustrating a fraud detection device;
Fig. 3 is a diagram illustrating an example of a table for calculating a determination score;
Fig. 4 is a block diagram illustrating a schematic configuration of a computer that functions as the fraud detection device;
Fig. 5 is a flowchart illustrating an example of a fraud detection process;
Fig. 6 is a flowchart illustrating an example of a person tracking process;
Fig. 7 is a flowchart illustrating an example of a determination score calculation process of gripping a basket or the like;
Fig. 8 is a flowchart illustrating an example of a determination score calculation process of staying in an area before a checkout;
Fig. 9 is a flowchart illustrating an example of a determination score calculation process of transfer of a basket or the like;
Fig. 10 is a flowchart illustrating an example of a determination score calculation process of leaving of an area before a checkout;
Fig. 11 is a flowchart illustrating an example of a bypassing determination process;
Fig. 12 is a diagram illustrating an overview of a bypassing detection process according to an embodiment;
Fig. 13 is a diagram illustrating an effect of the embodiment;
Fig. 14 is a diagram illustrating an effect of the embodiment;
Fig. 15 is a diagram illustrating an effect of the embodiment;
Fig. 16 is a diagram illustrating an effect of the embodiment;
Fig. 17 is a diagram illustrating an effect of the embodiment;
Fig. 18 is a diagram illustrating an effect of the embodiment; and
Fig. 19 is a diagram illustrating an effect of the embodiment.

### DESCRIPTION OF EMBODIMENTS

Hereinafter, an example of an embodiment according to the disclosed technique will be described with reference to the drawings.

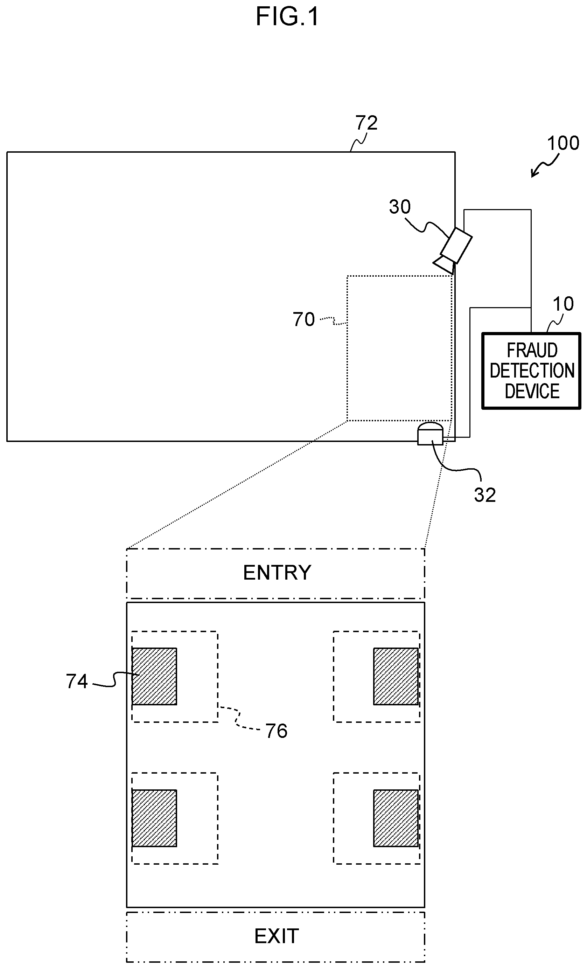

As illustrated in the upper diagram of Fig. 1, a fraud detection system 100 according to the embodiment includes a fraud detection device 10, a sensor 30, and a report device 32.

The sensor 30 acquires sensor data through sensing in a predetermined range in a store 72 including a payment area 70 (details thereof will be described below) and outputs the acquired sensor data to the fraud detection device 10. For example, the sensor 30 may be a camera that images a predetermined range, and a video captured by the camera may be used as sensor data. For example, the sensor 30 may be another sensor such as an infrared sensor.

The report device 32 is a device reporting that fraudulent passage has been detected based on a control signal output from the fraud detection device 10 when the fraudulent passage is detected. For example, the report device 32 is a speaker, a warning lamp, or the like that outputs a voice message, a warning sound, or the like. The report device 32 is installed, for example, near the payment area 70 or an exit of the store 72.

Here, as illustrated in the lower diagram of Fig. 1, the payment area 70 is an area where an entrance and an exit are defined, and is an area where the self-service checkout 74 is installed. In addition, a predetermined pre-checkout area 76 including a front of the self-service checkout 74 is set for each self-service checkout 74. The pre-checkout area 76 may be, for example, an area including a range in which a person who operates the self-service checkout 74 stands.

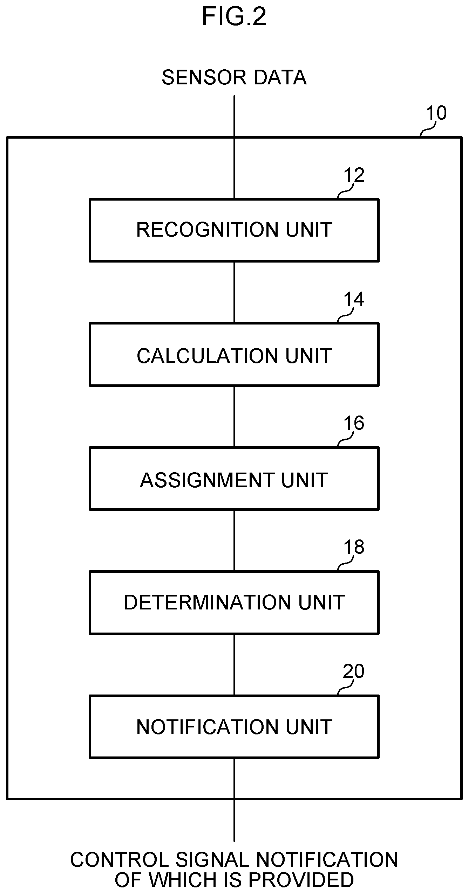

The fraud detection device 10 is an information processing device disposed in the store 72 or in a cloud. The fraud detection device 10 functionally includes a recognition unit 12, a calculation unit 14, an assignment unit 16, a determination unit 18, and a notification unit 20 as illustrated in Fig. 2.

Based on the sensor data input to the fraud detection device 10, the recognition unit 12 detects and tracks people who are within a predetermined range in the store 72 including the payment area 70, and recognizes each behavior of the tracked people. In the embodiment, a case where the predetermined range is set as the payment area 70 will be described. That is, the recognition unit 12 recognizes a behavior from entry to exit of the people from the payment area 70.

Specifically, when a video that is an example of the sensor data is acquired, the recognition unit 12 detects a person from each frame of the video using, for example, a technique such as You Only Look Once (YOLO). The recognition unit 12 tracks a person in the video by assigning the same person ID to the person estimated to be the same person between frames using a tracking technique such as DeepSORT. The recognition unit 12 specifies position coordinates of the person detected from each frame and stores a frame number, the person ID, and the position coordinates in a predetermined storage area in association. For example, the recognition unit 12 specifies the position coordinates of a position of the foot of the person in the real space based on coordinates on an image of the position of the foot of the person detected from each frame and an attitude of the camera. The recognition unit 12 may specify position coordinates of a three-dimensional position of a predetermined part of the person using the sensor data of another sensor such as a depth camera, a stereo camera, or a laser radar.

The recognition unit 12 detects entry to or exit from the payment area 70 and the pre-checkout area 76 for each of the detected people. Specifically, the recognition unit 12 compares the position coordinates of the specified person with the position coordinates of the payment area 70 and the pre-checkout area 76, and detects entry to or exit from each area.

For example, it is assumed that the position coordinates of the person in a frame with a frame number t (hereinafter referred to as a "frame t") are within the payment area 70 and the position coordinates of the person in a frame t-1 are outside of the payment area 70. In this case, the recognition unit 12 detects that the person enters the payment area 70 in the frame t. For example, it is assumed that the position coordinates of the person in the frame t are within the payment area 70, and the position coordinates of the person in the frame t-1 are also within the payment area 70. In this case, the recognition unit 12 detects that the person stays in the payment area 70 in the frame t. For example, it is assumed that the position coordinates of the person in the frame t are outside of the payment area 70 and the position coordinates of the person in the frame t-1 are within the payment area 70. In this case, in the frame t, the recognition unit 12 recognizes that the person has exited from the payment area 70. The recognition unit 12 similarly detects entry or exit and staying in the pre-checkout area 76.

The recognition unit 12 recognizes a behavior of a person using a technique or the like using skeleton information of the person. In the embodiment, the recognition unit 12 recognizes, as the behavior of the person, a behavior that requires payment set in advance as the behavior of the person who requires to perform payment, and a behavior that does not require payment set in advance as the behavior of the person who does not require to perform payment.

The payment-required behavior includes, for example, gripping of at least one (hereinafter referred to as a "basket or the like") of a basket, a cart, or a product, receiving of a basket or the like from another person, and a behavior related to an operation of the self-service checkout 74. The behavior related to the operation of the self-service checkout 74 includes staying in the pre-checkout area 76, reading product information such as a barcode assigned to a product by a scanner provided in the self-service checkout 74, and touching an operation surface such as a touch panel display of the self-service checkout 74.

The payment-not-required behavior includes transfer of a basket or the like to another person, a behavior indicating that the person is not involved in an operation of the self-service checkout 74, and passing of the payment area 70 in a state where the person does not hold the product. When a plurality of people stay in the pre-checkout area 76 corresponding to the same self-service checkout 74, the behavior indicating that the person is not involved in the operation of the self-service checkout 74 includes staying at a position farther from the self-service checkout 74 than other people, and leaving of the pre-checkout area 76 before other people.

Based on the behavior recognized by the recognition unit 12, the calculation unit 14 calculates, for each of the tracked people, a determination score indicating an extent to which the person is a person who requires to perform payment at the self-service checkout 74. Specifically, the calculation unit 14 calculates a determination score that becomes higher the more the recognized behavior corresponds to the payment-required behavior and becomes lower the more the recognized behavior corresponds to the payment-not-required behavior. More specifically, when each of the behaviors recognized for the tracked person is the payment-required behavior, the calculation unit 14 adds a behavior score weighted for each type of payment-required behavior to the determination score. When each of the recognized behaviors is a payment-not-required behavior, the calculation unit 14 subtracts the behavior score weighted for each type of payment-not-required behavior from the determination score, hands the behavior score to a determination score of another person satisfying a predetermined condition, or stops the calculation of the determination score.

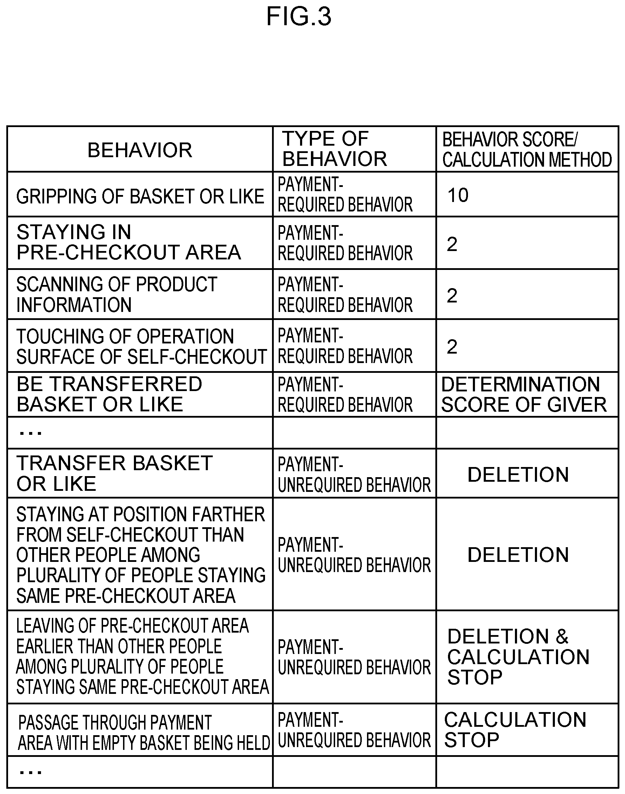

For example, as illustrated in Fig. 3, a table in which a behavior, a type of behavior (a payment-required behavior or a payment-not-required behavior), and a behavior score corresponding to the behavior or a calculation method for the determination score are associated with each other is defined. The calculation unit 14 acquires a behavior score corresponding to a behavior recognized by the recognition unit 12 or a calculation method for the determination score with reference to the table, and calculates a determination score of each person. For a weight of the behavior score for each behavior, an appropriate weight is set as a determination score used for bypassing detection. For example, by setting a behavior score of gripping of a basket or the like to be high and a behavior score of a behavior related to an operation of the self-service checkout 74 to be low, it is possible to prevent a person who grips the basket or the like and passes by in the self-service checkout 74 from being determined as a person who does not require to perform payment.

The assignment unit 16 assigns payment information indicating that the payment is completed to a person of which a payment behavior of performing the payment in the self-service checkout 74 has been confirmed. For example, when the recognition unit 12 recognizes a behavior of touching an operation surface of the self-service checkout 74 and the number of touches is a predetermined number of times or more, the assignment unit 16 confirms that a payment behavior has been performed and stores the payment information in a predetermined storage area by associating the payment information with a person ID of the person. When POS information indicating payment completion is acquired from the self-service checkout 74, the assignment unit 16 may confirm that the payment behavior has been performed and assign the payment information to the corresponding person ID. As a method of assigning the payment information using the POS information, a technique of the related art may be applied. Therefore, details of description thereof will be omitted here.

For each person passing through an exit of the store 72, the determination unit 18 determines whether the person corresponds to fraud in which a person passes through an exit without payment at a checkout, that is, checkout-bypassing based on the determination score and the payment information. Specifically, the determination unit 18 determines a person of which a determination score is equal to or higher than a threshold, that is, a person who requires to perform payment and to whom payment information is not assigned as a person who performs checkout-bypassing. As the threshold, for example, an appropriate value is set using a technique such as logistic regression.

The notification unit 20 notifies a clerk of fraudulent passage when a person who performs checkout-bypassing is determined, that is, fraudulent passage of the exit of the store 72 is detected. Specifically, the notification unit 20 generates a control signal for providing notification of occurrence of fraudulent passage by the report device 32, and outputs the control signal to the report device 32. For example, when the report device 32 is a speaker, the notification unit 20 generates voice data of a message or a warning sound indicating occurrence of the fraudulent passage, and outputs the voice data to the report device 32 as the control signal. For example, when the report device 32 is a warning lamp, the notification unit 20 outputs a control signal for turning on the warning lamp to the report device 32.

A notification method for the fraudulent passage is not limited to the above example. For example, the notification unit 20 may immediately transmit a message to an information processing terminal carried by a clerk or may record a log of fraudulent passage and transmit the message to the information processing terminal of the clerk at a predetermined timing.

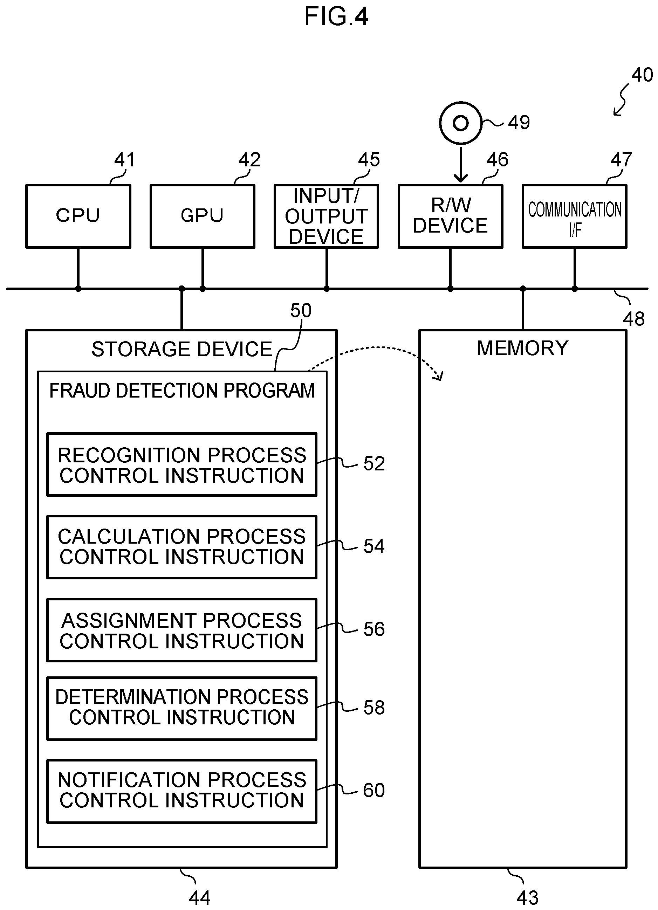

The fraud detection device 10 may be implemented by, for example, a computer 40 illustrated in Fig. 4. The computer 40 includes a central processing unit (CPU) 41 and a graphics processing unit (GPU) 42, a memory 43 serving as a temporary storage area, and a nonvolatile storage device 44. The computer 40 further includes an input/output device 45 such as an input device and a display device, and a read/write (R/W) device 46 that controls reading and writing of data from and on the storage medium 49. The computer 40 further includes a communication interface (I/F) 47 connected to a network such as the Internet. The CPU 41, the GPU 42, the memory 43, and the storage device 44, the input/output device 45, the R/W device 46, and the communication I/F 47 are connected to each other via a bus 48.

The storage device 44 is, for example, a hard disk drive (HDD), a solid state drive (SSD), a flash memory, or the like. The storage device 44 serving as a storage medium stores a fraud detection program 50 causing the computer 40 to function as the fraud detection device 10. The fraud detection program 50 includes a recognition process control instruction 52, a calculation process control instruction 54, an assignment process control instruction 56, a determination process control instruction 58, and a notification process control instruction 60.

The CPU 41 reads the fraud detection program 50 from the storage device 44, loads the fraud detection program 50 in the memory 43, and sequentially performs control instructions included in the fraud detection program 50. The CPU 41 operates as the recognition unit 12 illustrated in Fig. 2 by performing the recognition process control instruction 52. The CPU 41 operates as the calculation unit 14 illustrated in Fig. 2 by performing the calculation process control instruction 54. The CPU 41 operates as the assignment unit 16 illustrated in Fig. 2 by performing the assignment process control instruction 56. The CPU 41 operates as the determination unit 18 illustrated in Fig. 2 by performing the determination process control instruction 58. The CPU 41 operates as the notification unit 20 illustrated in Fig. 2 by performing the notification process control instruction 60. Accordingly, the computer 40 performing the fraud detection program 50 functions as the fraud detection device 10. The CPU 41 that executes programs is hardware. Some of the programs may be performed by the GPU 42.

Functions implemented by the fraud detection program 50 may be implemented by, for example, a semiconductor integrated circuit, more specifically, an application specific integrated circuit (ASIC), a field-programmable gate array (FPGA), or the like.

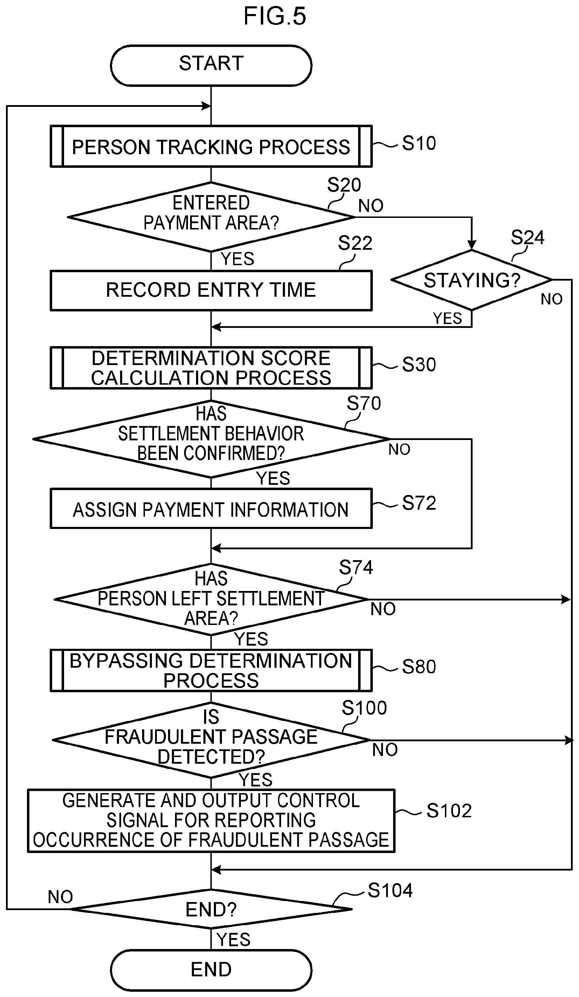

Next, an operation of the fraud detection system 100 according to the embodiment will be described. For example, when a store is opened, the fraud detection device 10, the sensor 30, and the report device 32 are powered on. When sensor data sensed by the sensor 30 is input to the fraud detection device 10, the fraud detection device 10 performs a fraud detection process illustrated in Fig. 5. The fraud detection process is an example of a fraud detection method of the disclosed technique. Hereinafter, a case where the sensor data is a video will be described as an example.

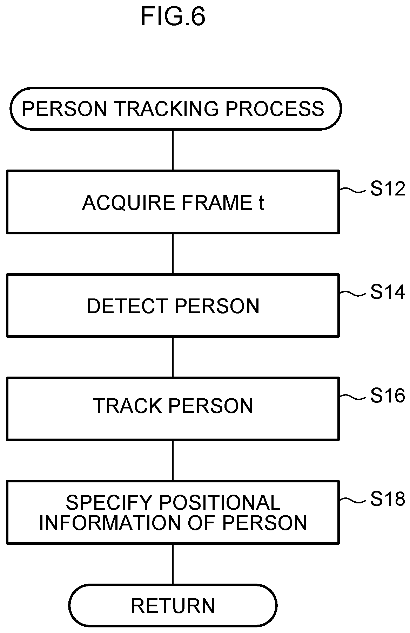

In step S10, a person tracking process is performed. Here, the person tracking process will be described in detail with reference to Fig. 6.

In step S12, the recognition unit 12 acquires the frame t of the video input to the fraud detection device 10. Subsequently, in step S14, the recognition unit 12 detects people from the frame t. Subsequently, in step S16, the recognition unit 12 tracks people in the video by comparing people detected until a frame t-1 with the people detected in the frame t and assigning the same people IDs to people estimated to be the same people. The recognition unit 12 assigns a new person ID to a person who first appears in the frame t.

Subsequently, in step S18, the recognition unit 12 specifies position coordinates of the person detected from the frame t, stores a frame number-t, a person ID, and position coordinates in a predetermined storage area in association, and returns to the fraud detection process (Fig. 5). The following processes are performed for each of the detected people.

Subsequently, in step S20, the recognition unit 12 determines whether a person has entered the payment area 70 by determining whether the position coordinates of the person in the frame t are within the payment area 70 and the position coordinates of the person in the frame t-1 are outside of the payment area 70. When the person has entered the payment area 70, the process proceeds to step S22. Before the person enters, while the person is staying, or after the person leaves the payment area 70, the process proceeds to step S24.

In step S22, the recognition unit 12 records an entry time to the payment area 70 in association with the person ID, and the process proceeds to step S30. Conversely, in step S24, the recognition unit 12 determines whether the person is staying in the payment area 70 by determining whether the position coordinates of the person in the frame t are within the payment area 70 and the position coordinates of the person in the frame t-1 are also within the payment area 70. When the person is staying in the payment area 70, the process proceeds to step S30. When the person has entered or left the payment area 70, the process proceeds to step S104.

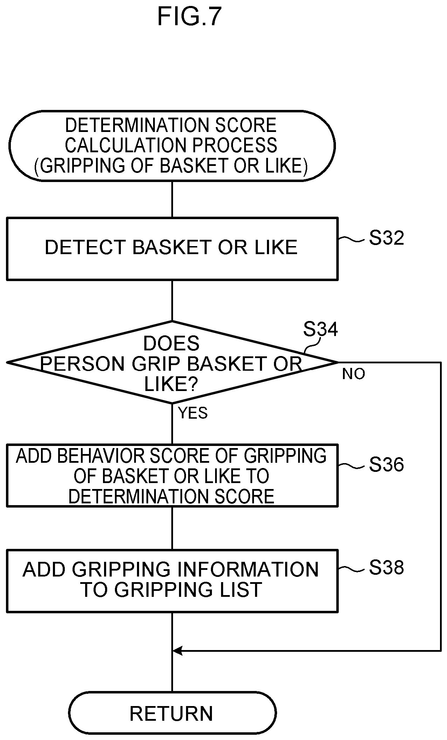

In step S30, a determination score calculation process is performed. Here, the determination score calculation process will be described in detail with reference to Figs. 7 to 10. As illustrated in Figs. 7 to 10, the determination score calculation process is performed for each type of behavior.

Fig. 7 is a flowchart illustrating an example of a determination score calculation process of gripping a basket or the like which is an example of the payment-required behavior.

In step S32, the recognition unit 12 detects the basket or the like from the frame t. As the detection method, a technique such as YOLO may be used similarly to the method of detecting a person. Subsequently, in step S34, the recognition unit 12 determines whether the person grips the basket or the like. For example, the recognition unit 12 may determine that the person grips the basket or the like when the skeleton information of the person recognized from the frame t indicates that the person grips an object, and the detected basket or the like and the person are in a predetermined positional relationship indicating the gripping of the basket or the like. When the person grips the basket or the like, the process proceeds to step S36. When the person does not grip the basket or the like, the process returns to the fraud detection process (Fig. 5).

In step S36, the calculation unit 14 adds a behavior score of the gripping of the basket or the like to a determination score corresponding to a person ID of a processing target person. Subsequently, in step S38, the calculation unit 14 adds gripping information in which the person ID of the processing target person, the basket ID of the basket or the like determined to be gripped by the person, and the frame number=t are associated with each other to a gripping list stored in the predetermined storage area, and returns the process to the fraud detection process (Fig. 5).

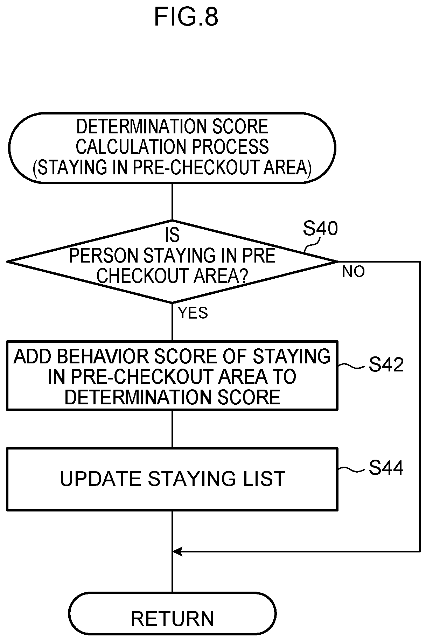

Fig. 8 is a flowchart illustrating an example of a determination score calculation process of staying in the pre-checkout area 76 as an example of the payment-required behavior.

In step S40, the recognition unit 12 determines whether the person is staying in the pre-checkout area 76 by determining whether the position coordinates of the person in the frame t are within the pre-checkout area 76 and the position coordinates of the person in the frame t-1 are also within the pre-checkout area 76. When the person is staying in the pre-checkout area 76, the process proceeds to step S42. When the person is not staying in the pre-checkout area 76, the process returns to the fraud detection process (Fig. 5).

In step S42, the calculation unit 14 adds the behavior score for staying in the pre-checkout area 76 to the determination score corresponding to the person ID of the processing target person. Subsequently, in step S44, the calculation unit 14 adds staying information in which the person ID of the processing target person, the checkout ID of the self-service checkout 74 corresponding to the pre-checkout area 76 in which the person stays, and the frame number=t are associated with each other to the staying list stored in the predetermined storage area, and returns the process to the fraud detection process (Fig. 5).

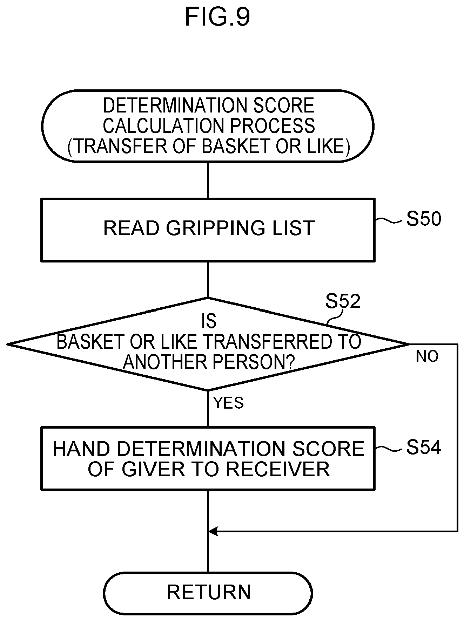

Fig. 9 is a flowchart illustrating an example of the determination score calculation process of the transfer of the basket or the like which is an example of the payment-not-required behavior.

In step S50, the calculation unit 14 reads the gripping list stored in the predetermined storage area. Subsequently, in step S52, the calculation unit 14 compares the gripping information in the frame t of the processing target person with the gripping information before the frame t-1 with reference to the gripping list, and determines whether the basket or the like gripped by the processing target person has been transferred to another person. When the basket or the like is transferred to the other person, the process proceeds to step S54. When there is no transfer of the basket or the like, the process returns to the fraud detection process (Fig. 5).

In step S54, the calculation unit 14 hands the determination score of the processing target person (giver) to the determination score of the person (receiver) to which the basket or the like is transferred. That is, the calculation unit 14 deletes the determination score of the giver and adds the deleted determination score of the giver to the determination score of the receiver. Then, the process returns to the fraud detection process (Fig. 5).

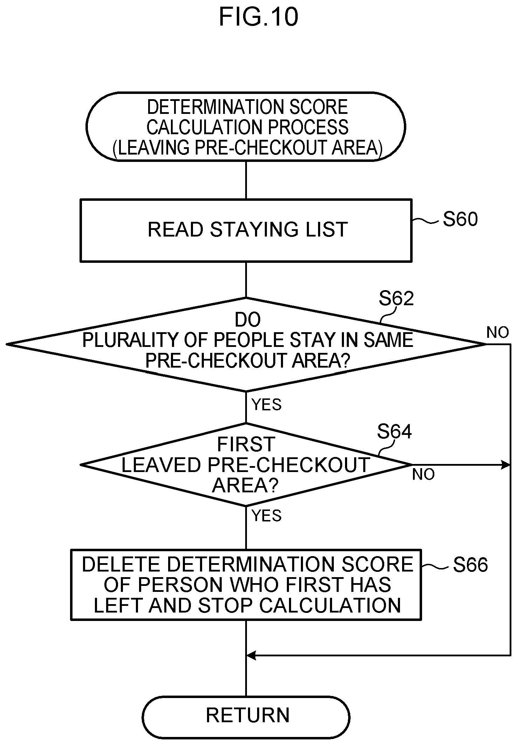

Fig. 10 is a flowchart illustrating an example of a determination score calculation process of leaving the pre-checkout area 76 which is an example of the payment-not-required behavior.

In step S60, the calculation unit 14 reads the staying list stored in the predetermined storage area. Subsequently, in step S62, the calculation unit 14 determines whether the processing target person stays in the pre-checkout area 76 and a plurality of people are in the same pre-checkout area 76 in the frame t-1 with reference to the staying list. When Yes is determined, the process proceeds to step S64. When No is determined, that is, the processing target person does not stay in the pre-checkout area 76 or stays alone, the process returns to the fraud detection process (Fig. 5).

In step S64, the calculation unit 14 determines whether the processing target person has left the pre-checkout area 76 first among the plurality of people staying in the pre-checkout area 76 in the frame t. The leaving first means that the processing target person leaves the pre-checkout area 76 while the other person is staying in the pre-checkout area 76. When the person has left first, the process proceeds to step S66. When the person has left last or has not yet left, the process returns to the fraud detection process (Fig. 5).

In step S66, the calculation unit 14 deletes the determination score of the processing target person who has first left the pre-checkout area 76, stops the calculation of the determination score according to a subsequent behavior, and returns the process to the fraud detection process (Fig. 5). When the calculation unit 14 stops calculating the determination score, the calculation unit 14 sets a flag indicating the stopping of the calculation in association with the person ID of the processing target person, and does not perform addition to the determination score even when a payment-required behavior for adding the determination score is recognized in the subsequent process.

The determination score calculation process in Figs. 7 to 10 is exemplary, and an appropriate determination score may be calculated for each of the payment-required behavior and the payment-not-required behavior.

Subsequently, in step S70, the assignment unit 16 determines whether the payment behavior has been confirmed for the processing target person. When the payment behavior is confirmed, the process proceeds to step S72. When the payment behavior has not been confirmed, the process proceeds to step S74. In step S72, the assignment unit 16 stores the payment information in the predetermined storage area in association with the person ID of the processing target person.

Subsequently, in step S74, the recognition unit 12 determines whether the person has left the payment area 70 by determining whether the position coordinates of the person in the frame t are outside of the payment area 70 and the position coordinates of the person in the frame t-1 are inside the payment area 70. When the person has left the payment area 70, the process proceeds to step S80. When the person has not left, the process proceeds to step S104.

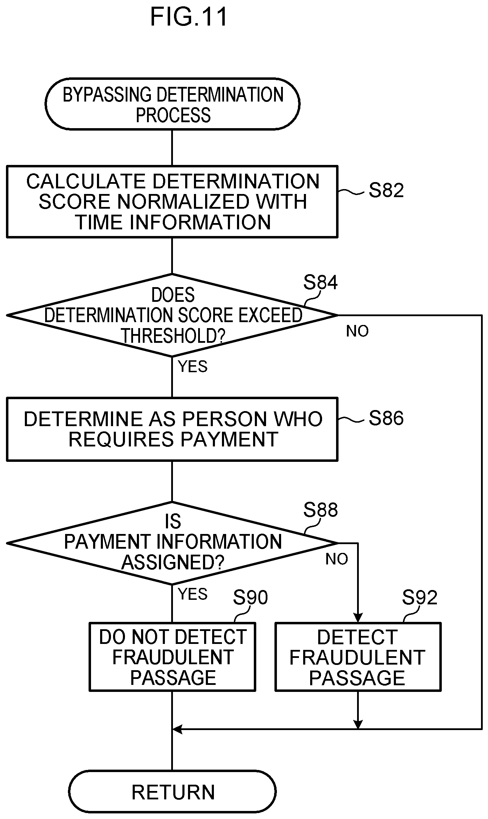

In step S80, a bypassing determination process is performed. Here, the bypassing determination process will be described with reference to Fig. 11.

In step S82, the calculation unit 14 acquires a time at which the processing target person leaves the payment area 70, and calculates a staying time in the payment area 70 from a difference from the stored entry time to the payment area 70. The calculation unit 14 calculates a normalized determination score by dividing the determination score calculated for the processing target person by the staying time. In each determination score calculation process described above, when a behavior of the processing target person corresponds to the payment-required behavior, the behavior score is added to the determination score for each frame. Therefore, there is a possibility that the longer the staying time in the payment area 70 is, the higher the determination score is. Accordingly, the determination score normalized by the staying time is calculated.

Subsequently, in step S84, the determination unit 18 determines whether the determination score normalized by the staying time exceeds a threshold. When the determination score exceeds the threshold, the process proceeds to step S86. When the determination score does not exceed the threshold, the process returns to the fraud detection process (Fig. 5). In step S86, the determination unit 18 determines that the processing target person is a person who requires to perform payment.

Subsequently, in step S88, the determination unit 18 determines whether payment information has been assigned to the processing target person determined to be a person requiring payment. When the payment information has been assigned, the process proceeds to step S90. When the payment information has not been assigned, the process proceeds to step S92.

In step S90, the determination unit 18 determines that the processing target person is not a person who perform checkout-bypassing, that is, does not the fraudulent passage, the process returns to the fraud detection process (Fig. 5). Conversely, in step S92, the determination unit 18 determines that the processing target person is a person who performs checkout-bypassing, that is, detects fraudulent passage, and returns the process to the fraud detection process (Fig. 5).

Subsequently, in step S100, the notification unit 20 determines whether the fraudulent passage is detected in the bypassing determination process. When the fraudulent passage is detected, the process proceeds to step S102. When the fraudulent passage is not detected, the process proceeds to step S104. In step S102, the notification unit 20 generates a control signal for reporting occurrence of the fraudulent passage by the report device 32 and outputs the control signal to the report device 32.

Subsequently, in step S104, the recognition unit 12 determines whether the fraud detection process ends, for example, by determining whether an instruction to end the fraud detection process has been received at a timing such as a closing time, whether the last frame of the input video has been processed. When Yes is determined, the fraud detection process ends. When No is determined, the process returns to step S10.

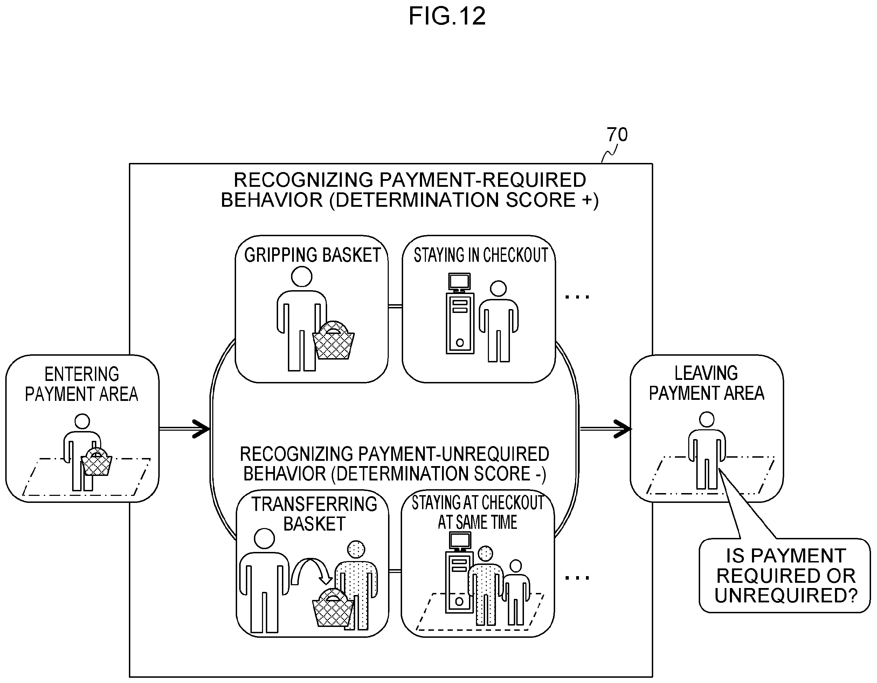

As described above, in the fraud detection system according to the embodiment, as illustrated in Fig. 12, the fraud detection device 10 recognizes a behavior of the person in the payment area 70 and calculates the determination score according to whether the behavior is a payment-required behavior or a payment-not-required behavior. Then, based on the determination score, the fraud detection device 10 determines whether each person is a person who requires to perform payment or a person who does not require to perform payment. Accordingly, when it is determined that the person does not require payment, the passage is not detected as fraudulent passage despite non-assignment of the payment information. That is, it is possible to prevent excessive detection when checkout-bypassing in which a person who does not perform payment passes through an exit is detected.

Effects of the embodiment will be specifically described in comparison with comparative examples.

First, in Comparative Example 1, a case where a person to which payment information is not assigned passes through an exit is detected as the case where the person is detected as a bypassing person.

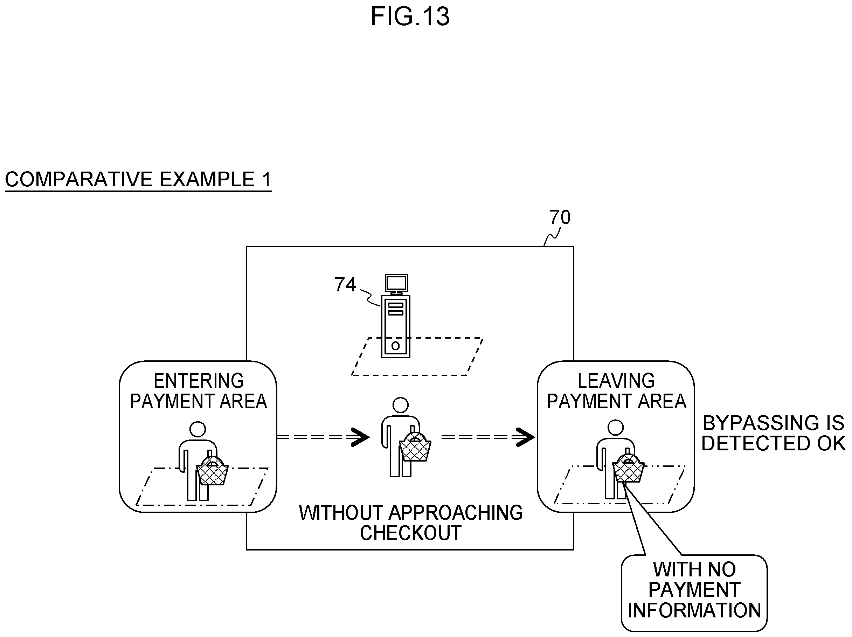

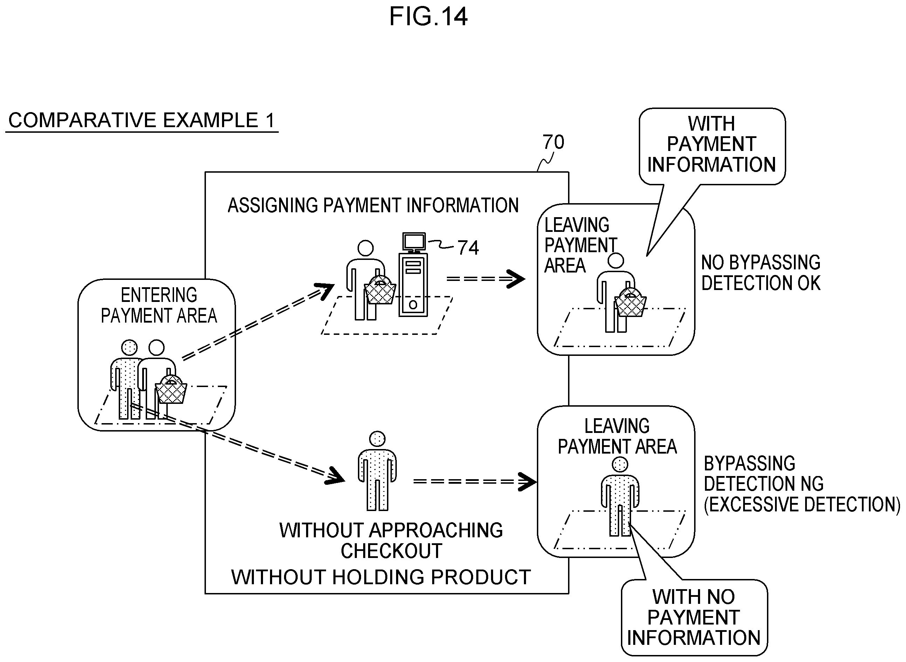

For example, as illustrated in Fig. 13, also in Comparative Example 1, when a person carrying a product passes through the payment area 70 without approaching the self-service checkout 74, the payment information is not assigned to the person. Therefore, the person is detected as a bypassing person. However, for example, as illustrated in Fig. 14, it is assumed that a group enters the payment area 70, one person with a basket or the like performs payment at the self-service checkout 74, and a companion leaves the payment area 70 without approaching the self-service checkout 74. In this case, since the payment information is not assigned to the companion, the person is detected as a bypassing person in Comparative Example 1 like the example of Fig. 13. However, since the companion is a person who does not require to perform payment, this detection is excessive detection. Not only a case where a group enters the payment area 70 but also a person who passes through the payment area 70 without holding a product is similarly detected as a bypassing person in Comparative Example 1.

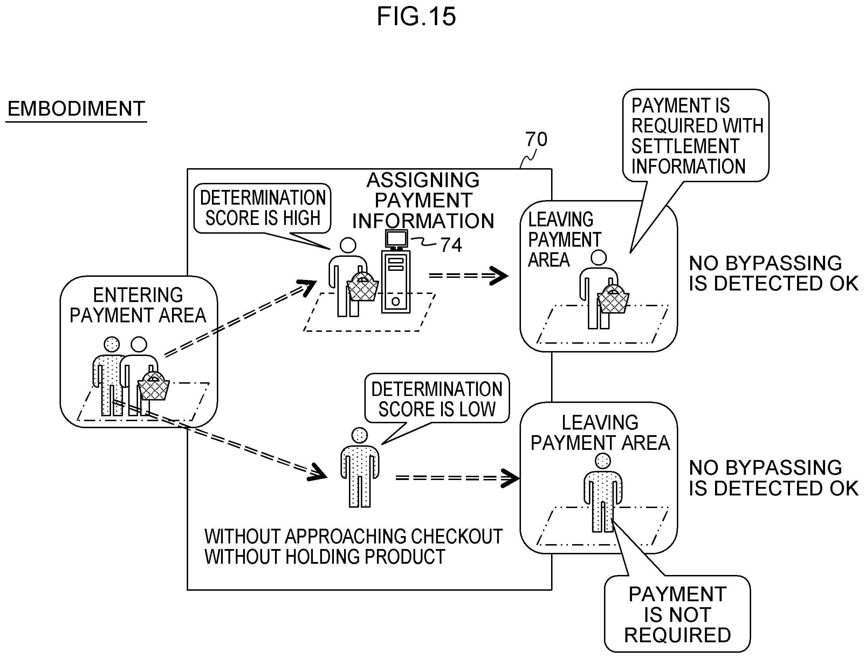

On the other hand, in the embodiment, as illustrated in Fig. 15, the payment-required behavior is not recognized for a companion, for example, since the companion does not grip the basket or the like. Therefore, the determination score becomes low, and the companion is determined as a person who does not require the payment. Accordingly, in the embodiment, even when the payment information is not assigned to the companion, the companion is not detected as a bypassing person, and thus excessive detection can be prevented. Similarly, since the determination score of a person who passes through the payment area 70 without carrying a product becomes low, it is possible to prevent the person from being detected as a bypassing person.

Next, in Comparative Example 2, a case where the payment information is not assigned and a person holds the basket or the like during passing of an exit is detected as a case where the person is detected as a bypassing person.

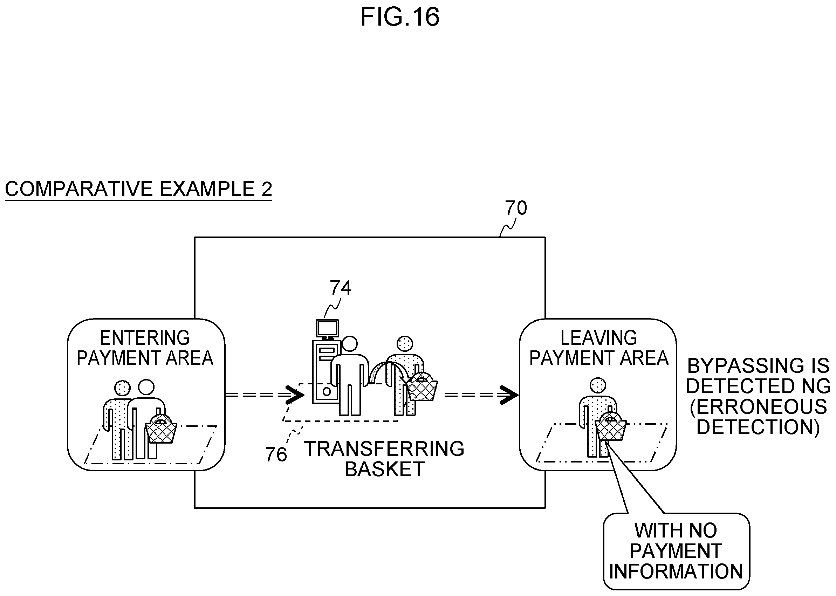

For example, as illustrated in Fig. 16, it is assumed that a group enters the payment area 70, the group stays in the pre-checkout area 76, a person who has performed payment transfers an empty basket to a companion before the payment is completed, and the companion first leaves the pre-checkout area 76 and the payment area 70. In this case, in Comparative Example 2, since the payment information is not assigned to the companion and the companion hold a basket or the like, there is a possibility of the companion being detected as a bypassing person, and thus excessive detection occurs.

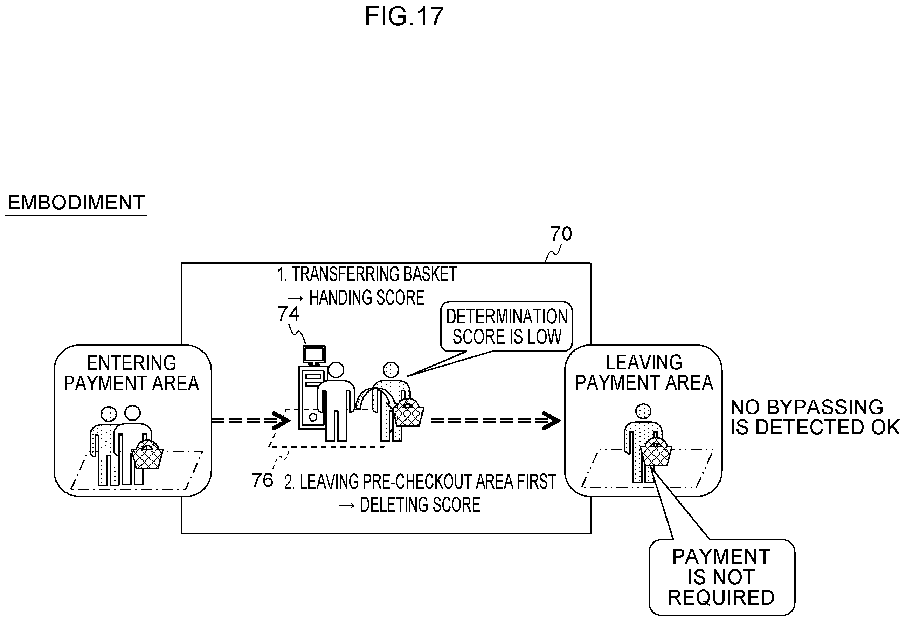

On the other hand, in the embodiment, as illustrated in Fig. 17, when the companion with the empty basket leaves the front of the checkout before the payment is completed, the determination score is handed from the checkout person to the companion during transferring of the basket. When the companion leaves the pre-checkout area 76 first, the determination score of the companion is deleted. Accordingly, since the determination score of the companion becomes low, it is possible to prevent the companion from being detected as a bypassing person.

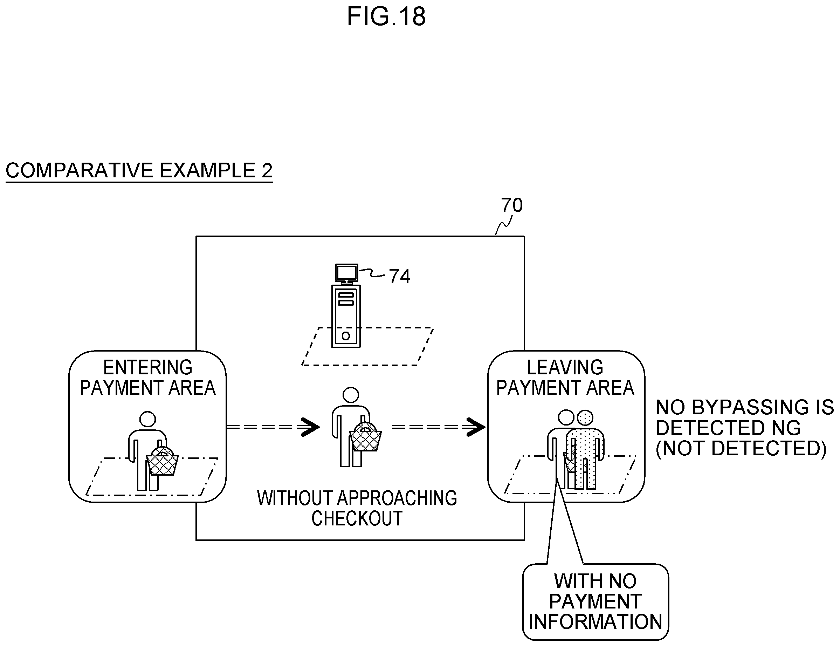

For example, in the case of Comparative Example 2 in Fig. 18, when a basket or the like is hidden by a shielding object such as another person during passing of an exit, it is not possible to determine information indicating that the person holds the basket or the like during passing of the exit, and the person cannot be detected as a bypassing person.

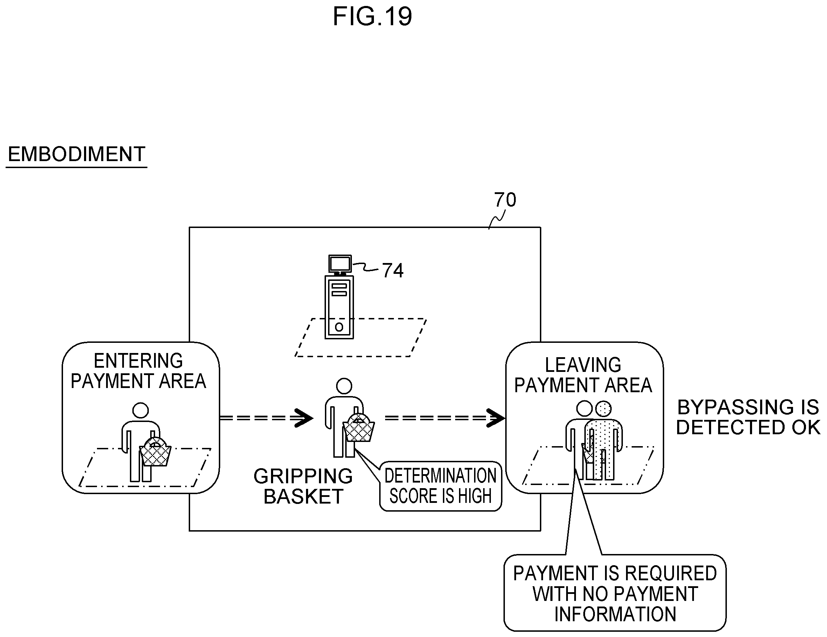

On the other hand, in the embodiment, as illustrated in Fig. 19, for a person with the basket or the like who passes through the payment area 70, the payment-required behavior indicating that the person grips the basket or the like before the person passes through the exit is recognized, and thus the determination score becomes high and the person is determined as a person who requires to perform payment. Accordingly, in the embodiment, even when the basket or the like is hidden during passing of the exit, the person can be detected as a bypassing person.

In a technique of the related art in which a payer is set in a group, an appropriate payer may not be set due to erroneous grouping. On the other hand, in the embodiment, since it is determined whether each person is a person who requires to perform payment without performing being grouped, the problem of the technique of the related art does not occur.

In this way, in the embodiment, by determining whether a person requires payment or a person does not require payment based on a behavior of the person in the payment area, it is possible to prevent excessive detection of the bypassing detection and robustly detect fraudulent passage. As a result, it is possible to reduce restriction of a layout in a store and a burden of monitoring by a clerk or the like.

In the above embodiment, the case where the predetermined range, that is, a range in which a behavior of a person is recognized, is set as a payment area has been described, but the present invention is not limited thereto. For example, the predetermined range may be set within a store, a behavior may be recognized by tracking a person from a time at which the person enters a store, and the behavior may be used to calculate the determination score.

A payment-required behavior and a payment-not-required behavior described in the above embodiment are exemplary, and the behaviors may be defined as appropriate behaviors in advance by observing an actual purchase scene.

In the above embodiment, the case where, when fraudulent passage is detected, the report device provides notification of the detection of the fraudulent passage has been described, but the present invention is not limited thereto. For example, an opening or closing gate provided at an exit may be controlled such that a person cannot pass when fraudulent passage is detected.

In the above embodiment, the fraud detection program is stored (installed) in advance in a storage device, but the present invention is not limited thereto. The program according to the disclosed technique may be provided in a form in which the program is stored in a storage medium such as a CD-ROM, a DVD-ROM, or a USB memory.

## Claims

1. A fraud detection program causing a computer to perform processing including:
detecting and tracking people who are within a predetermined range based on sensor data acquired through sensing in the predetermined range in a store including a payment area, where a self-service checkout is installed, and recognizing a behavior of each of the tracked people;
calculating a determination score indicating an extent to which each of the tracked people is a person who is required to perform payment at the self-service checkout, based on the recognized behavior;
assigning payment information, indicating that payment is completed, to a person who paid at the self-service checkout; and
determining fraudulent passage at an exit of the store for each person passing through the exit, based on the determination score and the payment information.

2. The fraud detection program according to claim 1, wherein the calculating of the determination score includes calculating the determination score that becomes higher the more the recognized behavior corresponds to a payment-required behavior determined in advance as a behavior of a person who is required to perform payment, and becomes lower the more the recognized behavior corresponds to a payment-not-required behavior determined in advance as a behavior of a person who is not required to perform payment.

3. The fraud detection program according to claim 2, wherein the calculating of the determination score includes adding a behavior score weighted for each type of payment-required behavior to the determination score in a case in which each of the behaviors recognized for the tracked people is the payment-required behavior, and, in a case in which each of the recognized behaviors is the payment-not-required behavior, calculating the determination score by subtracting the behavior score weighted for each type of payment-not-required behavior from the determination score, transferring the behavior score to the determination score of another corresponding person, or stopping calculating the determination scorepayment.

4. The fraud detection program according to claim 2 or 3, wherein:
the payment-required behavior includes at least one of a behavior related to gripping of at least one of a basket, a cart, or a product, or receiving at least one of a basket, a cart, or a product from another person, or a behavior related to an operation of the self-service checkout, and
the payment-not-required behavior includes at least one of transfer of at least one of a basket, a cart, or a product to another person, a behavior indicating non-involvement in the operation of the self-service checkout, or passage through the payment area in a state in which a product is not held.

5. The fraud detection program according to claim 4, wherein:
the behavior related to the operation of the self-service checkout includes at least one of staying of a person in a predetermined pre-checkout area including in front of the self-service checkout, reading of product information by a scanner provided at the self-service checkout, or touching on an operation surface of the self-service checkout, and
the behavior indicating non-involvement in the operation of the self-service checkout includes at least one of staying at a position farther from the self-service checkout than other people or leaving of the pre-checkout area earlier than other people, in a case in which a plurality of people stay in the pre-checkout area corresponding to the same self-service checkout.

6. The fraud detection program according to claim 5, wherein tracking the people includes detecting entry into and exit from the payment area and the pre-checkout area.

7. The fraud detection program according to any one of claims 1 to 6, wherein determining the fraudulent passage includes determining that a person for which the determination score is equal to or higher than a threshold value and to which the payment information is not assigned is a person who has fraudulently passed through the exit.

8. The fraud detection program according to any one of claims 1 to 7, wherein the fraud detection program causes the computer to perform processing of notifying a clerk of the fraudulent passage in a case in which the fraudulent passage of the exit is detected.

9. The fraud detection program according to claim 8, wherein notifying the clerk of the fraudulent passage is at least one of immediately transmitting a message to an information processing terminal carried by the clerk, recording a log of the fraudulent passage and transmitting the message to the information processing terminal at a predetermined timing, outputting a sound or a warning sound of the message near the payment area, or turning on a lamp installed near the payment area.

10. A fraud detection method causing a computer to perform processing comprising:
detecting and tracking people who are within a predetermined range based on sensor data acquired through sensing in the predetermined range in a store including a payment area, where a self-service checkout is installed, and recognizing a behavior of each of the tracked people;
calculating a determination score indicating an extent to which each of the tracked people is a person who is required to perform payment at the self-service checkout, based on the recognized behavior;
assigning payment information, indicating that payment is completed, to a person who paid at the self-service checkout; and
determining fraudulent passage at an exit of the store for each person passing through the exit, based on the determination score and the payment information.

11. The fraud detection method according to claim 10, wherein the calculating of the determination score includes calculating the determination score that becomes higher the more the recognized behavior corresponds to a payment-required behavior determined in advance as a behavior of a person who is required to perform payment, and becomes lower the more the recognized behavior corresponds to a payment-not-required behavior determined in advance as a behavior of a person who is not required to perform payment.

12. The fraud detection method according to claim 11, wherein the calculating of the determination score includes adding a behavior score weighted for each type of payment-required behavior to the determination score in a case in which each of the behaviors recognized for the tracked people is the payment-required behavior, and, in a case in which each of the recognized behaviors is the payment-not-required behavior, calculating the determination score by subtracting the behavior score weighted for each type of payment-not-required behavior from the determination score, transferring the behavior score to the determination score of another corresponding person, or stopping calculating the determination scorepayment.

13. The fraud detection method according to claim 11 or 12, wherein:
the payment-required behavior includes at least one of a behavior related to gripping of at least one of a basket, a cart, or a product, or receiving at least one of a basket, a cart, or a product from another person, or a behavior related to an operation of the self-service checkout, and
the payment-not-required behavior includes at least one of transfer of at least one of a basket, a cart, or a product to another person, a behavior indicating non-involvement in the operation of the self-service checkout, or passage through the payment area in a state in which a product is not held.

14. The fraud detection method according to claim 13, wherein:
the behavior related to the operation of the self-service checkout includes at least one of staying of a person in a predetermined pre-checkout area including in front of the self-service checkout, reading of product information by a scanner provided at the self-service checkout, or touching on an operation surface of the self-service checkout, and
the behavior indicating non-involvement in the operation of the self-service checkout includes at least one of staying at a position farther from the self-service checkout than other people or leaving of the pre-checkout area earlier than other people, in a case in which a plurality of people stay in the pre-checkout area corresponding to the same self-service checkout.

15. A fraud detection device, comprising:
a recognition unit configured to detect and track people who are within a predetermined range based on sensor data acquired through sensing in the predetermined range in a store including a payment area, where a self-service checkout is installed, and to recognize a behavior of each of the tracked people;
a calculation unit configured to calculate a determination score indicating an extent to which each of the tracked people is a person who is required to perform payment at the self-service checkout, based on the recognized behavior;
an assignment unit configured to assign payment information, indicating that payment is completed, to a person who paid at the self-service checkout; and
a determination unit configured to determine fraudulent passage at an exit of the store for each person passing through the exit, based on the determination score and the payment information.
